(19) Europäisches Patentamt / European Patent Office / Office européen des brevets

(11) **EP 3 333 045 B1**

(12) **EUROPEAN PATENT SPECIFICATION**

(45) Date of publication and mention
of the grant of the patent:
**14.04.2021 Bulletin 2021/15**

(21) Application number: **16832660.1**

(22) Date of filing: **30.06.2016**

(51) Int Cl.:
**B61L 23/18** *(2006.01)*          **B60L 15/40** *(2006.01)*
**B61L 3/12** *(2006.01)*          **B61L 23/20** *(2006.01)*
**B61L 23/14** *(2006.01)*          **B61L 23/34** *(2006.01)*

(86) International application number:
**PCT/JP2016/069376**

(87) International publication number:
**WO 2017/022381 (09.02.2017 Gazette 2017/06)**

(54) **TRAIN CONTROL SYSTEM**

ZUGSTEUERUNGSSYSTEM

SYSTÈME DE COMMANDE DE TRAIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2015 JP 2015155297**

(43) Date of publication of application:
**13.06.2018 Bulletin 2018/24**

(73) Proprietors:
• **KABUSHIKI KAISHA TOSHIBA
Minato-ku
Tokyo
105-8001 (JP)**
• **Toshiba Infrastructure Systems &
Solutions Corporation
Kawasaki-shi, Kanagawa 212-0013 (JP)**

(72) Inventors:
• **NAMEKI Hideaki
Tokyo 105-8001 (JP)**
• **TAJIMA Masahiro
Tokyo 105-8001 (JP)**

(74) Representative: **AWA Sweden AB
Junkersgatan 1
582 35 Linköping (SE)**

(56) References cited:
WO-A1-2011/086629    WO-A1-2012/144255
JP-A- H10 214 290    JP-A- H11 234 813
JP-A- H11 234 813    JP-A- 2002 204 507
JP-A- 2010 246 304    JP-A- 2010 246 304
JP-A- 2011 058 946    US-A1- 2012 197 466

## Description

Field

The embodiments of the present invention relate to a train control system.

Background

During rush hours or the like on a railroad, a plurality of trains become close to each other and run in a congested state in some cases. In such cases, a following train may be temporarily stopped between stations in response to a stopping signal to prevent a collision with a preceding train. If a train is temporarily stopped, a deceleration and a re-acceleration occur, which increase the amount of power consumption in the train. Furthermore, the ride quality for the passengers in the train is deteriorated.

There is disclosed a method in which a ground device recognizing the situations of respective trains within a route transmits information of a preceding train to a following train being a control target train, and the following train controls its own operation based on the preceding train information to suppress temporary stops between stations (Patent Literature 1).

Patent Literature 2 discloses an operation support device capable of avoiding strong acceleration and deceleration before a train station by using information on the occupancy of a train track from a system which automatically controls the arrival and departure of trains from a train station in combination with a history retaining unit. The history retaining unit contains information on the state of the preceding train.

Further, Patent Literature 3, discloses a train control system that improves the riding sensation by using a preceding-train position estimator and a preceding-train information notifier to avoid train delays during times of high train density.

However, the preceding train may be delayed by influences of a train running ahead thereof (hereinafter, "pre-preceding train"). In this case, the preceding train information is not changed from that in a normal operation until the preceding train approaches the pre-preceding train. Therefore, the following train performs a normal operation for a while after leaving a station and starts an operation at a reduced speed when the train position has advanced to some extent. This leads to a difficulty in avoiding a temporary stop due to a stopping signal.

Citation List

Patent Literature

    [Patent Literature 1] Japanese Patent No. 3829031
    [Patent Literature 2] US 2012/197466 A1
    [Patent Literature 3] JP 2010 246304 A

Summary

Technical Problem

An object is to provide a train control system that can suppress temporary stops between stations.

Solution to Problem

A train control system according to an embodiment includes an acquisition part, a prediction part, and a controller. The acquisition part acquires actual first-station arrival times or first-station departure times of a second train preceding a first train being a control target and at least one or more third trains among a plurality of trains preceding the second train. The prediction part predicts a first time at which a stopping signal received by the first train in front of a first station due to influences of the second and third trains is canceled based on the actual first-station arrival times or first-station departure times of the second and third trains. The controller controls an operation of the first train based on the first time.

Brief Description of Drawings

[FIG. 1] FIG. 1 is a conceptual diagram illustrating an example of a configuration of a train control system according to an embodiment and peripheral elements thereof.

[FIGS. 2] FIGS. 2 are block diagrams respectively illustrating an example of a configuration of a ground device 20 and an example of a configuration of an on-vehicle device 30.

[FIG. 3] FIG. 3 is a timing chart illustrating an operation of the train control system according to the embodiment.

Description of Embodiments

An embodiment of the present invention will be described below in detail with reference to the accompanying drawings. The present invention is defined according to the appended claims. The embodiment does not limit the present invention.

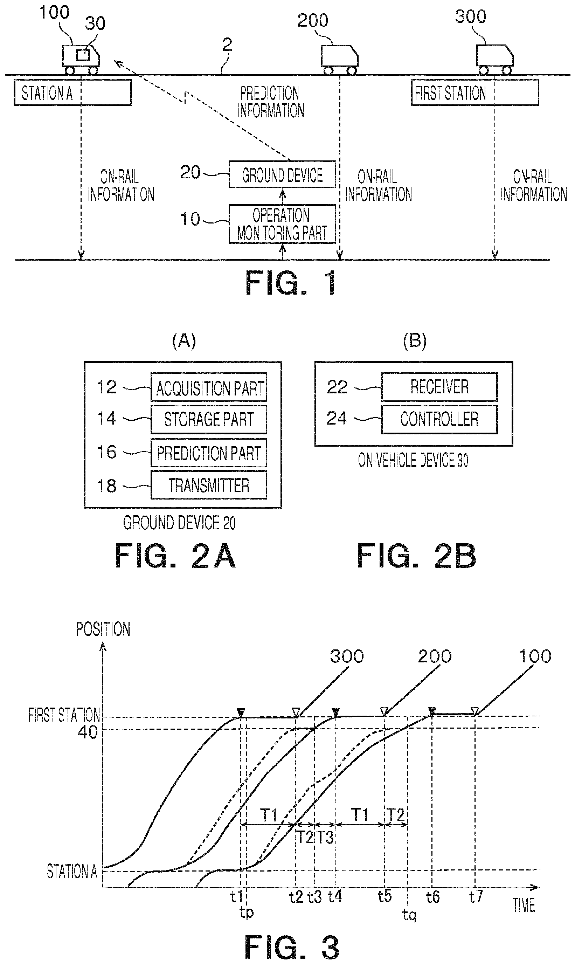

FIG. 1 is a conceptual diagram illustrating an example of a configuration of a train control system according to the present embodiment and peripheral elements thereof. The train control system includes a ground device 20 and an on-vehicle device 30.

The on-vehicle device 30 is mounted on a train 100 being a first train. The train 100 is a train as a control target and is located before a first station. For example, the train 100 is stopping at a station A. A train 200 being a second train is a train preceding the train 100. For example, the train 200 is running between the station A and the first station. A train 300 being a third train is a train preceding the train 200. For example, the train 300 is arriving at the first station. The first station is a station next to the station A. The trains 200 and 300 can have an identical configuration to that of the train 100. In this example, control of the train 100 as a control target is described and descriptions of control of the trains 200 and 300 are omitted for the sake of simplicity.

An operation monitoring part 10 and the ground device 20 are placed on the ground outside the trains 100 to 300 and the operation monitoring part 10 is connected to an on-rail detector (not illustrated) or the like placed on a track 2 to be communicable with the on-rail detector. The on-rail detector includes, for example, a track circuit provided in each section of the track 2. The on-rail detector transmits on-rail information of the trains 100 to 300 known by an on-rail detection using the track circuit to the operation monitoring part 10. The ground device 20 is connected to the on-vehicle devices 30 of the trains 100 to 300 to be communicable therewith.

The operation monitoring part 10 being an external device is a device that collects and monitors information such as on-rail information of the trains 100 to 300 running on the track 2. The operation monitoring part 10 includes a clock function and transmits times such as times at which the trains 100 to 300 arrived at the station A and the first station or times at which the trains 100 to 300 left the station A and the first station to the ground device 20.

The ground device 20 generates prediction information based on the on-rail information and the time information of the trains 100 to 300 received from the operation monitoring part 10 and transmits the generated prediction information to the train 100. The prediction information is, for example, prediction information of a time at which a stopping signal received by the train 100 in front of the first station is canceled. The prediction information is described later.

A protective device (not illustrated) on the ground sets a stopping signal (a limiting speed 0) or a limiting speed lower than a permanent speed limit behind a section where a train is located on the rails according to the distance from the train being on the rails based on the on-rail detection by the track circuit. An on-vehicle protective device activates a brake based on the limiting speed information from the ground protective device and its own train speed. When a preceding train is stopping at the first station, a stopping signal section is set behind the preceding train. When a following train enters the stopping signal section, the brake is automatically activated and the following train is stopped in the stopping signal section. This configuration can avoid a collision between the preceding train and the following train.

FIG. 2(A) is a block diagram illustrating an example of a configuration of the ground device 20. The ground device 20 includes an acquisition part 12, a storage part 14, a prediction part 16, and a transmitter 18.

The acquisition part 12 acquires an actual arrival time or departure time of the train 300 from the operation monitoring part 10 when the train 300 has arrived at the first station or has left the first station. For example, the operation monitoring part 10 detects an arrival of the train 300 at the first station based on position information and an identifier of the train 300 and transmits a time of the arrival to the ground device 20. This enables the ground device 20 to know the time at which the train 300 has arrived at the first station. The operation monitoring part 10 can also transmit the on-rail information and arrival and departure times of other trains (100 and 200, for example) to the ground device 20. This enables the ground device 20 to know the on-rail information of respective trains and the arrival and departure times thereof at other stations.

The storage part 14 stores therein a first predicted time T1 from when a train stops at the first station until when the train leaves the first station, a second predicted time T2 from when the train leaves the first station until when a stopping signal set behind the train during stopping of the train at the first station is canceled, and a third predicted time T3 until a following train that has reached a stopping signal section at the time of cancellation of the stopping signal stops at the first station. The second predicted time T2 and the third predicted time T3 are obtained based on a running simulation or an actual running time (an actually measured value) of the train and are stored in advance in the storage part 14.

The first predicted time T1 is a time (a station stopping time) during which a train is stopping at the first station. Although the station stopping times of trains on a train diagram are generally set equally, the actual station stopping times may vary according to stations. For example, the station stopping times of trains are likely to become longer at stations where there are many passengers changing trains. Therefore, the first predicted time T1 can be set for each station. In this case, the storage part 14 stores therein identifiers of the respective stations and the first predicted times T1 thereof to be associated with each other. The station stopping times of trains may also differ according to time periods or days. For example, during commuting times, the stations are crowded and thus the station stopping times of trains are likely to become longer. Conversely, when there are fewer passengers at stations on holidays, the stopping times of trains do not become longer. Therefore, the first predicted times T1 can be set to correspond to the time periods and days, respectively. Furthermore, the first predicted time T1 can be set for each train. In this case, the storage part 14 has stored therein the identifiers of the trains and the first predicted times T1 thereof to be associated with each other.

The second predicted time T2 is a time from when a train leaves the first station until when a stopping signal set behind the train during stopping of the train at the station is canceled. For example, a stopping signal set in front of the first station continues while the train 300 is stopping at the first station. When the train 300 thereafter leaves the first station and enters a next section, the stopping signal set in front of the first station is canceled. This enables the train 200 to enter the first station and stop at the station. This time from when the train 300 leaves the first station until when the stopping signal is canceled is the second predicted time T2.

The third predicted time T3 is a time until when a following train that has reached the stopping signal section in front of the first station at the time of cancellation of the stopping signal enters the first station and stops. For example, when the train 300 leaves the first station and enters the next section, the stopping signal is canceled. After the stopping signal is canceled, the train 200 enters the first station. In this manner, a predicted time from when a signaling device 40 has switched to an entrance allowing state until when the train 200 reaches the first station is the third predicted time T3.

With respect to the train 100 as a control target, the prediction part 16 specifies the preceding train 200 and the pre-preceding train 300 from a relation of the departure and arrival order on the train diagram, and predicts a first time at which a stopping signal set in front of the first station is canceled after the train 200 has left the first station based on an actual time of an arrival of the train 300 at the first station or an actual time of a departure of the train 300 from the first station. That is, the first time is a time at which the train 100 is predicted to become capable of entering the first station based on the departure and arrival times of the pre-preceding train 300. For example, the prediction part 16 calculates the first time using an actual time at which the train 300 arrived at the first station, the first predicted time T1, the second predicted time T2, and the third predicted time T3. The first predicted time T1, the second predicted time T2, and the third predicted time T3 are selected based on one of the station, the train, the time period, and the day as described above. The prediction part 16 can be, for example, an arithmetic device such as a CPU or a logic LSI. The calculation method of the first time is described later.

The transmitter 18 transmits information from the ground device 20 to the on-vehicle device 30 of the train 100. For example, the transmitter 18 transmits the first time (prediction information) predicted by the prediction part 16 to the on-vehicle device 30 of the train 100.

FIG. 2(B) is a block diagram illustrating an example of a configuration of the on-vehicle device 30. The on-vehicle device 30 includes a receiver 22 and a controller 24.

The receiver 22 receives information transmitted from the transmitter 18 of the ground device 20. For example, the receiver 22 receives the first time transmitted from the transmitter 18.

The controller 24 controls the operation of the train 100 based on the first time. For example, the controller 24 creates a running plan to prevent the train 100 from entering a relevant stopping signal section until a stopping signal set in front of the first station is canceled, and controls the operation of the train 100 based on the running plan. This enables the train 100 to arrive at the first station smoothly without being temporarily stopped in the stopping signal section set in front of the first station.

As described above, the ground device 20 and the on-vehicle device 30 illustrated in FIGS. 2(A) and 2(B) are configured as the train control system. The storage part 14 and the prediction part 16 can be provided in the on-vehicle device 30. In this case, the receiver 22 receives an actual arrival time or departure time from the ground device 20, and the prediction part 16 in the on-vehicle device 30 predicts the first time using the actual arrival time or departure time. However, provision of the storage part 14 and the prediction part 16 in each of many trains increases the cost. Therefore, it is preferable that the storage part 14 and the prediction part 16 be provided in the ground device 20.

An operation of the train control system according to the present embodiment is described next.

FIG. 3 is a timing chart illustrating an operation of the train control system according to the present embodiment. The vertical axis represents the positions of the trains 100 to 300. The vertical axis represents the train position and the horizontal axis represents the time. Broken lines indicate timings in a case where a conventional system is used. A time t1 on the horizontal axis denotes an actual time at which the train 300 arrived at the first station. A time tp (hereinafter, "prediction execution time tp") denotes a time point where a prediction of a first time tq is performed. The first time tq is a predicted time at which a stopping signal set in front of the first station is canceled when the train 100 as a control target enters the first station. Events before the prediction execution time tp are past events that already happened. Therefore, the actual time t1 at which the train 300 arrived at the first station is already known. On the other hand, events after the prediction execution time tp are future events that will happen in the future. Therefore, the first time tq at which the stopping signal set in front of the first station is canceled at the time of an entrance of the train 100 into the first station is unknown yet and is a time as a prediction target.

(When prediction execution time tp is between t1 and t2: case 1)

When the prediction execution time tp is between t1 and t2, the time t1 is already known. The time t1 is an actual time at which the train 300 arrived at the first station. However, times t2 to t7 after that time are not known yet. Therefore, the prediction part 16 predicts the first time tq based on the time t1 in the following manner.

First, the train 300 arrives at the first station at the time t1. At this time, the operation monitoring part 10 obtains on-rail information of the train 300. The acquisition part 12 acquires the time t1 at which the train 300 arrived at the first station from the operation monitoring part 10.

Next, at the time tp, the prediction part 16 predicts the first time tq using the time t1. For example, the prediction part 16 obtains the first to third predicted times T1 to T3 corresponding to the first station from the storage part 14 and predicts the first time tq based on the time t1 and the first to third predicted times T1 to T3.

The first predicted time T1 indicates a time (a station stopping time) during which a train is stopping at the first station. Therefore, the prediction part 16 performs the prediction assuming a time between t1 and t2 and a time between t4 and t5 are the first predicted time T1. The time between t1 and t2 is a time during which the train 300 is stopping at the first station. The time between t4 and t5 is a time during which the train 200 is stopping at the first station. The second predicted time T2 indicates a time from when a train leaves the first station until when a stopping signal set behind the train during stopping of the train at the station is canceled. Therefore, the prediction part 16 performs the prediction assuming a time between t2 and t3 and a time between t5 and tq are the second predicted time T2. The third predicted time T3 indicates a time until when a train that has arrived at a stopping signal section at the time of cancellation of the stopping signal stops at the first station. Therefore, the prediction part 16 performs the prediction assuming a time between t3 and t4 is the third predicted time T3.

The prediction part 16 further calculates a time between t1 and tq. For example, the prediction part 16 calculates the first time tq by adding the first predicted time T1 as the time between t1 and t2, the second predicted time T2 as the time between t2 and t3, the third predicted time T3 as the time between t3 and t4, the first predicted time T1 as the time between t4 and t5, and the second predicted time T2 as the time between t5 and tq to the time t1. That is, the prediction part 16 predicts the first time tq by computing Expression 1.

$$tq = t1 + T1 + T2 + T3 + T1 + T2 \quad \text{(Expression 1)}$$

Next, the transmitter 18 transmits the first time tq predicted by the prediction part 16 as prediction information to the on-vehicle device 30 of the train 100.

Subsequently, the receiver 22 of the on-vehicle device 30 receives the first time tq, and the controller 24 creates a running plan of the train 100 based on the first time tq. The controller 24 controls the operation of the train 100 in accordance with the running plan. The controller 24 can automatically control the operation of the train 100 to prevent the train 100 from being temporarily stopped by the stopping signal set in front of the first station. Alternatively, the controller 24 can display a target speed of the train 100 on a monitor (not illustrated) for train crews and enable a driver to perform an operation according to the target speed to prevent the train 100 from being temporarily stopped by the stopping signal set in front of the first station. The controller 24 alternatively can notify the driver of the predicted first time and cause the driver to perform an operation so as not to be temporarily stopped due to the stopping signal set in front of the first station. Therefore, the train control system according to the present embodiment can suppress temporary stops of the train 100 between the station A and the first station while the conventional system causes a train to be temporarily stopped between the station A and the first station, thereby increasing the amount of power consumption in the train and deteriorating the ride quality as indicated by the broken lines in FIG. 3.

(When prediction execution time tp is between t2 and t3: case 2)

When the prediction execution time tp is between t2 and t3, the time t2 is already known. The time t2 is an actual time at which the train 300 left the first station. However, times t3 to t7 after that time are not known yet. Therefore, the prediction part 16 can predict the first time tq based on the time t2 in the following manner.

At t2, the train 300 leaves the first station and the departure time of the train 300 is settled. That is, the acquisition part 12 can acquire the actual time t2 at which the train 300 left the first station from the operation monitoring part 10. Accordingly, the prediction part 16 predicts the first time tq using the actual time t2. At this time, the prediction is performed between t2 and t3. Therefore, the time tp is any time between t2 and t3.

The prediction part 16 obtains the first to third predicted times T1 to T3 corresponding to the first station from the storage part 14 and predicts the first time tq based on the time t2 and the first to third predicted times T1 to T3. That is, the prediction part 16 calculates a time between t2 and tq. For example, the prediction part 16 calculates the first time tq by adding the second predicted time T2 as the time between t2 and t3, the third predicted time T3 as the time between t3 and t4, the first predicted time T1 as the time between t4 and t5, and the second predicted time T2 as the time between t5 and tq to the time t2. That is, the prediction part 16 predicts the first time tq by computing Expression 2.

$$tq=t2+T2+T3+T1+T2 \qquad \text{(Expression 2)}$$

Next, the transmitter 18 transmits the first time tq predicted by the prediction part 16 as prediction information to the on-vehicle device 30 of the train 100.

Subsequently, the receiver 22 of the on-vehicle device 30 receives the first time tq, and the controller 24 creates a running plan of the train 100 based on the first time tq. The controller 24 controls the operation of the train 100 in accordance with the running plane. The control method of the train 100 can be identical to that in the case 1 described above.

In the case 1 described above, the prediction part 16 predicts the first time tq from the time t1 at which the train 300 arrived at the first station. However, actual times may be different from the first to third predicted times T1 to T3. In this case, the prediction accuracy becomes lower as a time (t1, for example) being a prediction reference is temporally more distant from the first time tq being a prediction target. That is, the first time tq is more likely to be greatly deviated from the actual time at which the train 100 arrives at the stopping signal section that is set in front of the first station as the time tp at which the prediction is performed is an earlier time. To reduce a temporal difference between the first time tq and the actual time, the prediction part 16 can repeat the prediction of the first time tq based on a time (t2, for example) of an event happening next as in the case 2. The case 2 enables the first time tq to be predicted more accurately than the case 1.

(When prediction execution time tp is between t3 and t4: case 3)

When the prediction execution time tp is between t3 and t4, the time t3 is already known. The time t3 is an actual time at which a stopping signal having been set in front of the first station due to the train 300 has been canceled. However, times t4 to t7 after that time are not known yet. Therefore, the prediction part 16 can predict the first time tq based on the time t3 in the following manner.

The acquisition part 12 can acquire the actual time t3 from the operation monitoring part 10. Accordingly, the prediction part 16 predicts the first time tq using the actual time t3. At this time, the prediction is performed between t3 and t4. Therefore, the time tp is any time between t3 and t4.

The prediction part 16 obtains the first to third predicted times T1 to T3 corresponding to the first station from the storage part 14 and predicts the first time tq from the time t3 and the first to third predicted times T1 to T3. That is, the prediction part 16 calculates a time between t3 and tq. For example, the prediction part 16 calculates the first time tq by adding the third predicted time T3 as the time between t3 and t4, the first predicted time T1 as the time between t4 and t5, and the second predicted time T2 as the time between t5 and tq to the time t3. That is, the prediction part 16 predicts the first time tq by computing Expression 3.

$$tq=t3+T3+T1+T2 \qquad \text{(Expression 3)}$$

Next, the transmitter 18 transmits the first time tq predicted by the prediction part 16 as prediction information to the on-vehicle device 30 of the train 100.

Subsequently, the receiver 22 of the on-vehicle device 30 receives the first time tq, and the controller 24 creates a running plan of the train 100 based on the first time tq. The controller 24 controls the operation of the train 100 in accordance with the running plan. The control method of the train 100 can be identical to that in the case 1 described above.

In the cases 1 and 2 described above, the prediction part 16 predicts the first time tq based on the time t1 or t2. However, in the case 3, the prediction part 16 predicts the first time tq based on the time t3 of an event happening after the times t1 and t2. Accordingly, the case 3 enables the first time tq to be predicted more accurately than the cases 1 and 2.

(When prediction execution time tp is between t4 and t5: case 4)

When the prediction execution time tp is between t4 and t5, the time t4 is already known. The time t4 is an actual time at which the train 200 arrived at the first station. However, times t5 to t7 after that time are not known yet. Therefore, the prediction part 16 can predict the first time tq based on the time t4 in the following manner.

The train 200 arrives at the first station at t4, the actual arrival time t4 of the train 200 is settled. That is, the acquisition part 12 can acquire the actual arrival time t4 from the operation monitoring part 10. Accordingly, the prediction part 16 predicts the first time tq using the actual arrival time t4. At this time, the prediction is performed between t4 and t5. Therefore, the time tp is any time between t4 and t5.

The prediction part 16 obtains the first and second predicted times T1 and T2 corresponding to the first station from the storage part 14 and predicts the first time tq from the actual arrival time t4 and the first and second predicted times T1 and T2. That is, the prediction part 16 calculates a time between t4 and tq. The prediction part 16 calculates the first time tq by adding the first predicted time T1 as the time between t4 and t5 and the second predicted time T2 as the time between t5 and tq to the time t4. That is, the prediction part 16 predicts the first time tq by computing Expression 4.

$$tq=t4+T1+T2 \qquad \text{(Expression 4)}$$

Next, the transmitter 18 transmits the first time tq predicted by the prediction part 16 as prediction information to the on-vehicle device 30 of the train 100.

Subsequently, the receiver 22 of the on-vehicle device 30 receives the first time tq, and the controller 24 creates a running plan of the train 100 based on the first time tq. The controller 24 controls the operation of the train 100 in accordance with the running plan. The control method of the train 100 can be identical to that in the case 1 described above.

In the cases 1 to 3 described above, the prediction part 16 predicts the first time tq based on the times t1 to t3, respectively. However, in the case 4, the prediction part 16 predicts the first time tq based on the time t4 of an event happening after the times t1 to t3. Accordingly, the case 4 enables the first time tq to be predicted more accurately than the cases 1 to 3.

(When prediction execution time tp is between t5 and t6: case 5)

When the prediction execution time tp is between t5 and t6, the time point t5 is already known. The time point t5 is an actual time at which the train 200 left the first station. However, times tq to t7 after that time are not known yet. Therefore, the prediction part 16 can predict the first time tq based on the time t5 in the following manner.

When the train 200 leaves the first station at t5, the actual departure time t5 of the train 200 is settled. That is, the acquisition part 12 can acquire the actual departure time t5 from the operation monitoring part 10. Accordingly, the prediction part 16 predicts the first time tq using the actual departure time t5. At this time, the prediction is performed between t5 and t6. Therefore, the time tp is any time between t5 and t6.

The prediction part 16 obtains the second predicted time T2 corresponding to the first station from the storage part 14 and predicts the first time tq based on the actual departure time t5 and the second predicted time T2. That is, the prediction part 16 calculates a time between t5 and tq. For example, the prediction part 16 calculates the first time tq by adding the second prediction time as the time between t5 and tq to the time t5. That is, the prediction part 16 predicts the first time tq by computing Expression 5.

$$tq=t5+T2 \qquad \text{(Expression 5)}$$

Next, the transmitter 18 transmits the first time tq predicted by the prediction part 16 as prediction information to the on-vehicle device 30 of the train 100.

Subsequently, the receiver 22 of the on-vehicle device 30 receives the first time tq, and the controller 24 creates a running plan of the train 100 based on the first time tq. The controller 24 controls the speed of the train 100 in accordance with the running plan. The control method of the train 100 can be identical to that in the case 1 described above.

In the cases 1 to 4 described above, the prediction part 16 predicts the first time tq based on the times t1 to t4, respectively. However, in the case 5, the prediction part 16 predicts the first time tq based on the time t5 of an event happening after the times t1 to t4. Accordingly, the case 5 enables the first time tq to be predicted more accurately than the cases 1 to 4.

In this way, the train control system according to the present embodiment sequentially performs the cases 1 to 5 described above in time series, thereby enabling the train 100 to run at appropriate speeds up to the stopping signal section set in front of the first station while enhancing the accuracy of the first time tq. Accordingly, the train 100 can suppress temporary stops or re-accelerations between the station A and the first station. As a result, the amount of power consumption in the train 100 is reduced and the ride quality for the passengers in the train 100 is improved. The train control system can arbitrarily perform any one or a plurality of the cases 1 to 5.

Furthermore, the train control system according to the present embodiment predicts the first time tq considering not only the preceding train 200 but also the train 300 preceding the train 200. Therefore, the train control system can control the speed of the train 100 from an earlier period. As a result, temporary stops of the train 100 due to the stopping signal set in front of the first station can be suppressed more. The train control system can predict the first time tq considering a train (not illustrated) preceding the train 300 in order to control the train 100. In this case, the train control system can control the operation of the train 100 from a further earlier period.

In the embodiment described above, the train control system predicts the first time tq at which the stopping signal set in front of the first station for the train 100 is canceled. However, the train control system can predict other times based on the first to third predicted times T1 to T3. For example, the train control system can predict the time t2 at which the train 300 leaves the first station, the time t3 at which a stopping signal set in front of the first station for the train 200 is canceled, the times t4 and t6 at which the trains 100 and 200 arrive at the first station, respectively, the times t5 and t7 at which the trains 100 and 200 leave the first station, respectively, and the like.

In the embodiment described above, the train control system controls the train 100 as a control target. However, the train control system can also control other trains 200 and 300 as control targets. In this case, the trains 200 and 300 also include the on-vehicle device 30 and the prediction parts 16 in the respective on-vehicle devices 30 predict the first times corresponding to the trains 200 and 300 based on information from other preceding trains (not illustrated), respectively. It suffices that controllers of the trains 200 and 300 create running plans based on the first times corresponding thereto and control the trains 200 and 300 in accordance with the created running plans, respectively.

## Claims

1. A train control system, comprising:

   an acquisition part (12) configured to acquire actual first-station arrival times or first-station departure times with respect to a second train (200) preceding a first train (100) being a control target and at least one or more third trains (300) among a plurality of trains preceding the second train (200);
   a prediction part (16) configured to predict a first time at which a stopping signal received by the first train (100) in front of a first station due to influences of the second (200) and third trains (300) is canceled based on the actual first-station arrival times or first-station departure times of the second (200) and third trains (300);
   wherein the prediction part (16) is configured:

   to predict the first time at which a stopping signal received by the first train (100) in front of a first station due to influences of the third train (300) is canceled based on the actual first-station arrival time or actual first-station departure time of the third train (300), and
   to subsequently predict the first time at which a stopping signal received by the first train (100) in front of the first station due to influences of the second and third trains (200, 300) is canceled based on the actual first-station arrival time or actual first-station departure time of the second train (200); and
   a controller (24) configured to control an operation of the first train (100) based on the first time; wherein the controller (24) notifies a driver of the first train (100) of the first time and performs operation support for avoiding an entrance of the first train (100) into a stopping signal section in front of the first station before the first time.

2. The system of Claim 1, wherein the controller (24) creates a running plan for avoiding an entrance of the first train (100) into a stopping signal section in front of the first station before the first time and controls an operation of the first train (100) or notifies a driver of the first train (100) of the created running plan to perform operation support.

3. The system of any one of Claims 1 to 2, wherein
   the acquisition part (12) and the prediction part (16) are located in an external device outside the first train (100), and
   the controller (24) is located in the first train (100).

4. The system of any one of Claims 1 to 2, wherein

the acquisition part (12) is located in a ground device (20) placed outside the first train (100), and
the prediction part (16) and the controller (24) are located on the first train (100).

5. The system of any one of Claims 1 to 4, further comprising a storage part (14) configured to store therein a first predicted time from which a train stops at a station until when the train leaves the station, a second predicted time until a stopping signal having been set behind the train is canceled after the train leaves the station and travels to a next section, and a third predicted time until a following train having arrived at a stopping signal section at a time of cancellation of the stopping signal stops the station, wherein
the prediction part (16) predicts the first time using the first to third predicted times; wherein the prediction part (16) calculates the first time by adding the first predicted period, the second predicted period, the third predicted period, the first predicted period, and the second predicted period to a time at which the third train (300) has stopped at the first station;
and/or wherein the prediction part (16) calculates the first time by adding the second predicted period, the third predicted period, the first predicted period, and the second predicted period to a time at which the third train (300) has left the first station.

6. The system of Claim 5, wherein
the storage part (14) stores therein a plurality of the first to third predicted times differing according to running sections, stations, trains, time periods, or days, and
the prediction part (16) predicts the first time using the first to third prediction times selected based on at least any of running sections, stations, trains, time periods, or days.

**Patentansprüche**

1. Ein Zugsteuerungssystem, umfassend:

   einen Erfassungsteil (12), der konfiguriert ist, tatsächliche Ankunftszeiten eines ersten Bahnhofs oder Abfahrtszeiten eines ersten Bahnhofs in Bezug auf einen zweiten Zug (200), der einem ersten Zug (100), der ein Steuerungsziel ist, vorausgeht, und mindestens einen oder mehrere dritte Züge (300) unter einer Vielzahl von Zügen, die dem zweiten Zug (200) vorausgehen, zu erfassen
   einen Vorhersageteil (16), der konfiguriert ist, einen ersten Zeitpunkt vorherzusagen, zu dem ein Haltesignal, das von dem ersten Zug (100) vor einem ersten Bahnhof aufgrund von Einflüssen des zweiten (200) und dritten Zuges (300) empfangen wird, basierend auf den tatsächlichen Ankunftszeiten des ersten Bahnhofs oder den Abfahrtszeiten des zweiten (200) und dritten Zuges (300) am ersten Bahnhof aufgehoben wird;
   wobei der Vorhersageteil (16) konfiguriert ist:

   den ersten Zeitpunkt vorherzusagen, zu dem ein Haltesignal, das der erste Zug (100) vor einem ersten Bahnhof aufgrund von Einflüssen des dritten Zuges (300) empfängt, auf der Grundlage der tatsächlichen Ankunftszeit am ersten Bahnhof oder der tatsächlichen Abfahrtszeit am ersten Bahnhof des dritten Zuges (300) aufgehoben wird, und
   um nachfolgend die erste Zeit vorherzusagen, zu der ein Haltesignal, das von dem ersten Zug (100) vor der ersten Station aufgrund von Einflüssen des zweiten und dritten Zuges (200, 300) empfangen wird, basierend auf der tatsächlichen Ankunftszeit der ersten Station oder der tatsächlichen Abfahrtszeit der ersten Station des zweiten Zuges (200) aufgehoben wird; und
   eine Steuerung (24), die konfiguriert ist, einen Betrieb des ersten Zuges (100) basierend auf der ersten Zeit zu steuern; wobei die Steuerung (24) einen Fahrer des ersten Zuges (100) über die erste Zeit benachrichtigt und eine Betriebsunterstützung durchführt, um eine Einfahrt des ersten Zuges (100) in einen Haltesignalabschnitt vor dem ersten Bahnhof vor der ersten Zeit zu vermeiden.

2. Das System nach Anspruch 1, wobei die Steuerung (24) einen Fahrplan zum Vermeiden einer Einfahrt des ersten Zuges (100) in einen Haltesignalabschnitt vor dem ersten Bahnhof vor dem ersten Zeitpunkt erstellt und einen Betrieb des ersten Zuges (100) steuert oder einen Triebfahrzeugführer des ersten Zuges (100) über den erstellten Fahrplan informiert, um eine Betriebsunterstützung durchzuführen.

3. Das System nach einem der Ansprüche 1 bis 2, wobei
der Erfassungsteil (12) und der Vorhersageteil (16) in einer externen Vorrichtung außerhalb des ersten Zuges (100) angeordnet sind und die Steuerung (24) in dem ersten Zug (100) angeordnet ist.

**4.** Das System nach einem der Ansprüche 1 bis 2, wobei
der Erfassungsteil (12) sich in einer Bodenvorrichtung (20) befindet, die außerhalb des ersten Zuges (100) angeordnet ist, und
der Vorhersageteil (16) und die Steuerung (24) sich im ersten Zug (100) befinden.

**5.** Das System nach einem der Ansprüche 1 bis 4, ferner umfassend einen Speicherteil (14), der konfiguriert ist, darin eine erste vorhergesagte Zeit zu speichern, von der an ein Zug an einem Bahnhof hält, bis der Zug den Bahnhof verlässt, eine zweite vorhergesagte Zeit, bis ein Haltesignal, das hinter dem Zug gesetzt wurde, aufgehoben wird, nachdem der Zug den Bahnhof verlässt und zu einem nächsten Abschnitt fährt, und eine dritte vorhergesagte Zeit, bis ein nachfolgender Zug, der an einem Haltesignalabschnitt angekommen ist, zu einem Zeitpunkt der Aufhebung des Haltesignals den Bahnhof anhält, wobei
der Vorhersageteil (16) die erste Zeit unter Verwendung der ersten bis dritten vorhergesagten Zeiten vorhersagt; wobei der Vorhersageteil (16) die erste Zeit berechnet, indem er die erste vorhergesagte Zeitspanne, die zweite vorhergesagte Zeitspanne, die dritte vorhergesagte Zeitspanne, die erste vorhergesagte Zeitspanne und die zweite vorhergesagte Zeitspanne zu einer Zeit addiert, zu der der dritte Zug (300) an der ersten Station angehalten hat; und/oder wobei der Vorhersageteil (16) die erste Zeit berechnet, indem er die zweite vorhergesagte Zeitspanne, die dritte vorhergesagte Zeitspanne, die erste vorhergesagte Zeitspanne und die zweite vorhergesagte Zeitspanne zu einer Zeit addiert, zu der der dritte Zug (300) den ersten Bahnhof verlassen hat.

**6.** Das System nach Anspruch 5, wobei
der Speicherteil (14) eine Vielzahl der ersten bis dritten vorhergesagten Zeiten darin speichert, die sich nach Fahrstrecken, Bahnhöfen, Zügen, Zeiträumen oder Tagen unterscheiden, und
der Vorhersageteil (16) die erste Zeit unter Verwendung der ersten bis dritten Vorhersagezeiten vorhersagt, die auf der Grundlage von mindestens einem der Laufabschnitte, Bahnhöfe, Züge, Zeitperioden oder Tage ausgewählt wurden.

**Revendications**

**1.** Système de commande de train, comprenant:

une partie d'acquisition (12) configurée pour acquérir des moments d'arrivée en première gare ou des moments de départ de première gare réels concernant un second train (200) précédant un premier train (100) qui est une cible de commande et au moins un ou plusieurs troisièmes trains (300) parmi une pluralité de trains précédant le second train (200);
une partie de prédiction (16) configurée pour prédire un premier moment auquel un signal d'arrêt reçu par le premier train (100) devant une première gare en raison d'influences des second (200) et troisième trains (300) est annulé sur la base des moments d'arrivée à la première gare ou des moments de départ de la première gare réels des second (200) et troisième trains (300);
dans lequel la partie de prédiction (16) est configurée:

pour prédire le premier moment auquel un signal d'arrêt reçu par le premier train (100) devant une première gare en raison d'influences du troisième train (300) est annulé sur la base du moment d'arrivée à la première gare réel ou du moment de départ de la première gare réel du troisième train (300), et
pour prédire ensuite le premier moment auquel un signal d'arrêt reçu par le premier train (100) devant la première gare en raison d'influences des second et troisième trains (200, 300) est annulé sur la base du moment d'arrivée à la première gare réel ou du moment de départ de la première gare réel du second train (200); et
un organe de commande (24) configuré pour commander un fonctionnement du premier train (100) sur la base du premier moment; où l'organe de commande (24) notifie à un conducteur du premier train (100) le premier moment et effectue un soutien de fonctionnement pour éviter une entrée du premier train (100) dans une section de signal d'arrêt devant la première gare avant le premier moment.

**2.** Système selon la revendication 1, dans lequel l'organe de commande (24) crée un plan de circulation pour éviter une entrée du premier train (100) dans une section de signal d'arrêt devant la première gare avant le premier moment et commande un fonctionnement du premier train (100) ou notifie à un conducteur du premier train (100) le plan de circulation créé pour effectuer un soutien de fonctionnement.

3. Système selon l'une quelconque des revendications 1 à 2, dans lequel
la partie d'acquisition (12) et la partie de prédiction (16) sont situées dans un dispositif externe à l'extérieur du premier train (100), et
l'organe de commande (24) est situé dans le premier train (100).

4. Système selon l'une quelconque des revendications 1 à 2, dans lequel
la partie d'acquisition (12) est située dans un dispositif au sol (20) placé à l'extérieur du premier train (100), et
la partie de prédiction (16) et l'organe de commande (24) sont situés sur le premier train (100).

5. Système selon l'une quelconque des revendications 1 à 4, comprenant en outre une partie de stockage (14) configurée pour y stocker un premier moment prédit depuis l'instant auquel un train s'arrête à une gare jusqu'à l'instant auquel le train quitte la gare, un second moment prédit jusqu'à ce qu'un signal d'arrêt ayant été établi derrière le train soit annulé après que le train quitte la gare et se déplace jusqu'à une section suivante, et un troisième moment prédit jusqu'à ce qu'un train suivant qui est arrivé à une section de signal d'arrêt à un moment d'annulation du signal d'arrêt s'arrête à la gare, dans lequel
la partie de prédiction (16) prédit le premier moment en utilisant les premier à troisième moments prédits; dans lequel la partie de prédiction (16) calcule le premier moment en ajoutant la première période prédite, la seconde période prédite, la troisième période prédite, la première période prédite et la seconde période prédite à un moment auquel le troisième train (300) s'est arrêté à la première gare;
et/ou dans lequel la partie de prédiction (16) calcule le premier moment en ajoutant la seconde période prédite, la troisième période prédite, la première période prédite et la seconde période prédite à un moment auquel le troisième train (300) a quitté le première gare.

6. Système selon la revendication 5, dans lequel
la partie de stockage (14) y stocke une pluralité des premier à troisième moments prédits différant selon les sections de circulation, les gares, les trains, les périodes ou les jours, et
la partie de prédiction (16) prédit le premier moment en utilisant les premier à troisième moments de prédiction sélectionnés sur la base d'au moins l'un quelconque des sections de circulation, des gares, des trains, des périodes ou des jours.

100  30                    200                        300

2

STATION A          PREDICTION          FIRST STATION
                   INFORMATION

ON-RAIL        20 ~  GROUND DEVICE      ON-RAIL            ON-RAIL
INFORMATION                            INFORMATION        INFORMATION

               10 ~  OPERATION
                     MONITORING PART

## FIG. 1

(A)                              (B)

12 ~  ACQUISITION PART           22 ~  RECEIVER

14 ~  STORAGE PART               24 ~  CONTROLLER

16 ~  PREDICTION PART            ON-VEHICLE DEVICE 30

18 ~  TRANSMITTER

GROUND DEVICE 20

## FIG. 2A          FIG. 2B

POSITION

                                    300        200        100

FIRST STATION
40

                        T1          T1   T2
                        T2 T3

STATION A

        t1      t2 t3 t4    t5    t6    t7
        tp                  tq            TIME

## FIG. 3

**EP 3 333 045 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3829031 B
- US 2012197466 A1
- JP 2010246304 A